# EUROPEAN PATENT APPLICATION

(11) **EP 2 688 314 A2**
(43) Date of publication of application: **22.01.2014**
(21) Application number: 13176910.1
(22) Date of filing: 17.07.2013
(51) Int. Cl.: H04R 25/00

(54) **Hearing assistance device with wireless communication for on- and off-body accessories**

(30) Priority: 17.07.2012 US 201213551215
(71) Applicant: Starkey Laboratories, Inc., Eden Prairie, MN 55344 (US)
(72) Inventor: Solum, Jeffrey Paul, Shorewood Minnesota 55331 (US); Sacha, Michael Karl, Chanhassen Minnesota 55317 (US)
(74) Representative: Maury, Richard Philip

(57) **Abstract**

The present disclosure related to hearing assistance devices such as hearing aids, and in particular to a hearing assistance device with wireless communication for on- and off- body accessories. In various embodiments, a hearing aid includes a housing, hearing assistance electronics within the housing, and conductive material incorporated into a portion of the housing. According to various embodiments, the conductive material includes a transmission line portion configured to conduct a signal from the hearing assistance electronics to an antenna portion of the conductive material on an exterior surface of the housing. In various applications, the conductive material includes a first antenna configured for short range communication with other body worn devices or accessories. The hearing aid also includes a second antenna within the housing, the second antenna configured for conducting RF radiation for long range communication, in various embodiments.

## Description

### FIELD OF THE INVENTION

The present subject matter relates generally to hearing assistance devices, including, but not limited to hearing aids, and in particular to a hearing assistance device with wireless communication for on- and off- body accessories.

### BACKGROUND

Modern hearing assistance devices typically include digital electronics to enhance the wearer's experience. In the specific case of hearing aids, current designs employ digital signal processors rich in features. Their functionality is further benefited from wireless communications. However, different countries have different frequency bands available for use. And the amount of absorption of radio signals changes significantly with frequency of the signals. Furthermore, communications at different frequencies can require substantially different electronics in various cases.

What is needed in the art is improved short range and long range communications for hearing assistance devices.

### SUMMARY

Disclosed herein, among other things, are methods and apparatus for hearing assistance devices, including, but not limited to hearing aids, and in particular to a hearing assistance device with wireless communication for on- and off- body accessories.

The present disclosure relates to the wireless communication of information for a hearing aid, the hearing aid including a housing, hearing assistance electronics within the housing, and conductive material incorporated into a portion of the housing. According to various embodiments, the conductive material includes a transmission line portion configured to conduct radio frequency (RF) radiation from the hearing assistance electronics to an antenna portion of the conductive material on an exterior surface of the housing.

Another aspect of the present subject matter includes a hearing aid for a wearer having a hearing impairment, the hearing aid including a housing and hearing assistance electronics within the housing. A first antenna is incorporated into a portion of the housing, the antenna including a portion making contact with the wearer's skin and configured for short range communication with other body worn devices or accessories. The hearing aid also includes a second antenna within the housing, the second antenna configured for conducting RF radiation for long range communication, in various embodiments.

This Summary is an overview of some of the teachings of the present application and not intended to be an exclusive or exhaustive treatment of the present subject matter. Further details about the present subject matter are found in the detailed description and appended claims. The scope of the present invention is defined by the appended claims and their legal equivalents.

### BRIEF DESCRIPTION OF THE DRAWINGS

FIG. 1 illustrates a system including wireless ear-to-ear hearing assistance device communication, according to one embodiment of the present subject matter.

FIG. 2 illustrates a system for wireless hearing assistance device communication, according to one embodiment of the present subject matter.

FIG. 3 illustrates a system for wireless hearing assistance device communication including antenna coupling, according to one embodiment of the present subject matter.

FIGS. 4A-4B illustrate hearing assistance devices including antenna channels in the housing, according to various embodiments of the present subject matter.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an" "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims, along with the full scope of legal equivalents to which such claims are entitled.

The present subject matter relates generally to hearing assistance devices, including, but not limited to hearing aids, and in particular to a hearing assistance device with wireless communication for on- and off- body accessories. Various embodiments include a hearing instrument having a means of wireless communications with another hearing aid worn on the body or body worn accessories using an antenna and/or electrodes that are molded into the shell or faceplate of the hearing instrument.

Wireless technology is currently being added to hearing aids for various functions such as ear-to-ear communication, wireless programming, configuration and data logging, streaming audio, bi-directional audio and remote control. Frequencies available for wireless communication such as the unlicensed but regulated ISM frequencies at 900 MHz and 2.4 GHz offer a large amount of bandwidth and allow sufficient RF power to cover many of the use cases shown above namely 2-5. Antennas embedded in hearing instruments present a challenge owing to the small size and limited space available in custom type hearing instruments. Hearing instruments using a conductive resin to form an antenna for the purpose of long range off the body and ear to ear communication can be used to build a conductive layer on the outside of a custom hearing aid shell or faceplate. The present subject matter relates to an antenna for far field communication with off body accessories and for ear to ear and body worn accessories to ear worn devices. Laboratory experiments have proven that an antenna formed using this conductive resin is effective for far field communications at 900 MHz and at 2, 4 GHz. Further geometries for the antenna can be formed in virtually any shape own the surface or as part of the enclosure of a hearing instrument The antenna can be formed that include features for impendance matching the antenna for a particular radio input or output impedance. Shapes and features that can suppress harmonic output are also realizable in an antenna formed as part of the plastic enclosure for a hearing instrument. Connection to the antenna can be made through compression fittings or direct attachment to the case using conductive materials such as conductive epoxy or using conductors heat welded into or onto the plastic. Flexible circuits consistent with transmission lines can be used to conduct electric currents from radio transceivers within the hearing instrument to the case of the aid through this means.

The present subject matter relates to an integrated antenna as part of the hearing aid outer shell for long range EM waves that can propagate to and from the hearing aids to off body devices such as programmers, remote controls, wireless microphones, assisted listening devices, etc., at frequencies that have regulatory acceptance throughout most regions of the world and that have sufficiently high enough frequency to build small antennas that fit within a hearing instrument.

Modern hearing communication devices equipped with ultra low power wireless transceivers may require the use of wireless antennas for the purpose of transmitting and receiving analog and digital information. In order to achieve an acceptable link margin between other wireless stations which may include a companion hearing instrument, an antenna system should be constructed that is relatively efficient given the size of the hearing assistance device. The antenna being considered for such a small system falls into the category of small aperture antenna, owing to their small size with respect to their operating frequency. These small aperture antennas lead to low radiation efficiency which further reduces the RF link budget The present subject matter provides a method of increasing the size (aperture) of the antenna, by integrating it with part of the exterior shell of a hearing instrument. This antenna will be integrated into the faceplate or integrated into the shell of a hearing instrument. The faceplate and shell when joined form the exterior surface of the hearing instrument. By integrating the antenna into the exterior of the hearing instrument or housing, the effective aperture of the antenna is maximized. The antenna, either open or shunt type, may be wound around or within the exterior of a shell or faceplate. Integrated contacts are used to connect the antenna to the transceiver ASIC inside the hearing instrument, in various embodiments.

In various embodiments, the present subject matter provides an antenna constructed using conductive plastic. This plastic resin is embedded with conductive material for the purpose of making the housing for a hearing instrument conductive or portions of the housing conductive and using that conductive property to build an antenna as part of the housing. The conductors of the antenna could be insulated from contact to human tissue to prevent detuning of the antenna, in various embodiments. A two shot injection molding overlay would be one example where the second shot would be of a non-conductive material which would act as the insulator layer. Another example includes running the mold cavity blocks hot which causes the base resin to flow to the surface trapping the conductive material between these non-conductive skins. In one embodiment, custom hearing aids are constructed using stereolithography for best fit within a patient's ear. Stereolithography uses a laser beam to cure resin in layers. This layered construction technique allows for non-homogeneous layers of various plastics, and elastomers to be added to modify subsequent layers. In one embodiment, layers of elastomers or polymers containing conductive materials can be added to form an antenna on the interior exterior or layer of the outer shell or faceplate of a custom hearing instrument. In another embodiment, the intermediate conductive elements of the present subject matter are fabricated using three-dimensional printing techniques, where a conductive material having the desired conductive properties and that is solid at ambient temperatures is heated to a liquid state. Materials that are useful for forming conductive elements according to the present invention include thermoplastic conductive elastomers and metals. The liquefied conductive material is then disposed, in a precisely focused spray (e.g., through an ink jet type nozzle) under control of a computer. In this way the geometry of the antenna can be controlled so as to adjust the electrical properties such as the impedance and aperture of the desired antenna, even if the outer surface is a custom one off type shape such as the shell of a custom hearing instrument. The conductive material is then permitted to harden and then is further coated to insulate it from contact with the wearer's skin. Another method is to utilize a 'stent' type antenna system. In this application a one-time expandable (self-looking design) stent is constructed as an antenna. In its free state it is inserted (pre-wired) into the post cured shell. Once in place it is expanded via conventional means and locked in place either by the natural contours or pre-engineered retainers placed during the modeling process.

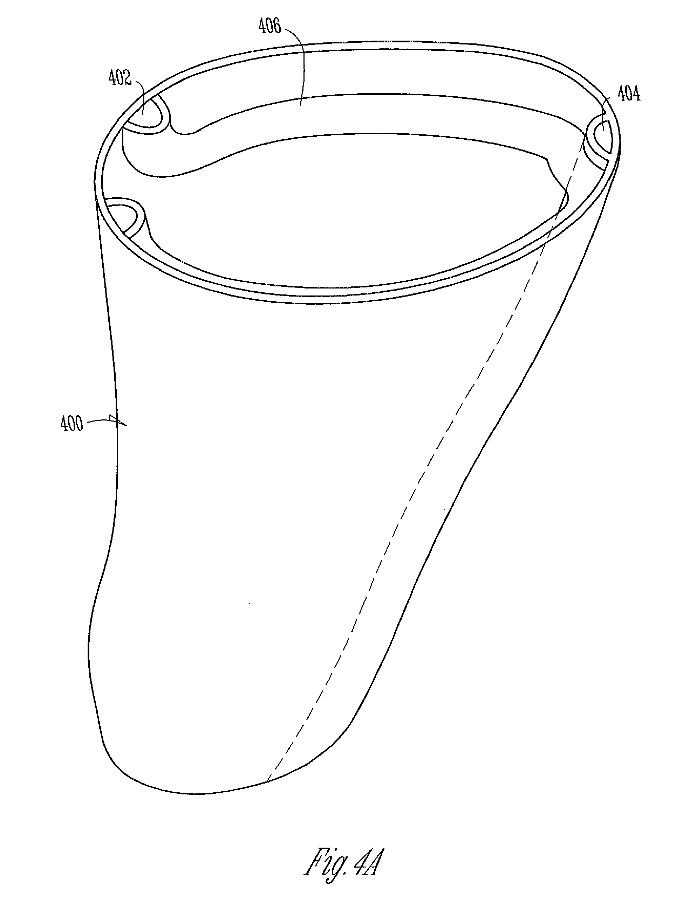

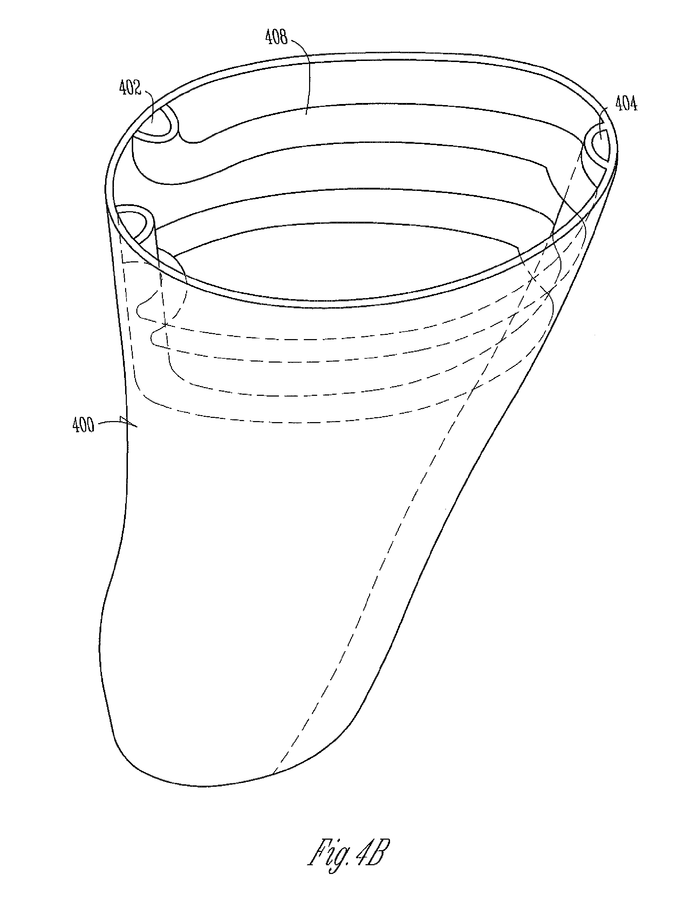

Various embodiments include building a channel or space in the outer shell of a hearing assistance device in which material can be poured or injected as a conductive liquid to form an antenna. FIGS. 4A-4B illustrate hearing assistance devices 400 including an antenna channel 402 in the housing, according to various embodiments of the present subject matter. In FIG. 4A, the channel 402 includes a single turn 406 about an opening in the housing of the device. In various embodiments, the channel 402 can extend down the wall to form a larger cavity alongside the wall to accommodate various geometries, such as circular, oval, rectangular or irregular shapes. The channel can also be fabricated using known three-dimensional fabrication techniques to obtain different patterns, such as the spiral pattern with multiple turns 408 depicted in FIG. 4B. The hearing assistance device 400 includes an air vent 404 in various embodiments. The material poured or injected into the channel can remain a liquid or gel or be cured once it is in place. Conductive material that remains liquid could be made up of an amalgam of metals such as gallium and indium which is known to remain a liquid or gel at low temperatures or it could be made of conductive epoxy that may contain additional metals in suspension for the purpose of improving the conductivity of such material. The channel or void can be fabricated into the shell faceplate or housing of a hearing instrument. The quantity of conductive material injected into the channel or void can be adjusted to maintain the necessary impedance for matching the antenna and fabricating an efficient radiator. Metal pins can be inserted into the conductive material forming the antenna for subsequent connection to a transmission line and or radio ASIC within the hearing instrument.

Various embodiments of the present subject matter include hearing instrument having a means of communication with off body accessories and with another hearing aid worn on the body or body worn accessories. Frequencies around 900 MHz are not allocated for worldwide coverage. In addition frequencies above 900 MHz are absorbed by human tissue such that a body shadow effect must be accounted for when computing the link budget for ear to ear and ear to body worn electronics. This body absorption may make communication difficult if not impossible for small hearing instruments with very small antennas. Conductive links between 100 KHz and 30 MHz work well for Body Area networks and are not affected by body shadow effects. This type of communication requires conductive contact to the skin.

Long range UHF communication practical for use from off the body to hearing instruments is somewhat unreliable due to body shadow effects. A conductive or near field communication (NFMI) link between the car worn devices can reduce the body shadow effects that occur when one ear or the other is not in line of sight with the off body device or accessory. Having a conductive link between two hearing instruments provides a spatial diversity path for off body to on body communications by allowing one aid to relay information from an off body device to the other instrument. In addition, the conductive or near field magnetic propagation provides reliable high speed ear to ear communication.

In various embodiments, hearing instruments use a conductive resin to form an antenna for the purpose of long range off the body and ear to ear communication. This conductive resin can be used to build a conductive connection to the patient's skin for conductive type communication between ears and other body worn accessories that may be in contact with the patient's skin, in various embodiments.

The present subject matter provides for long range EM waves can propagate to and from the hearing aids to off body devices such as programmers, remote controls, wireless microphones, assisted listening devices, etc., at frequencies that have regulatory acceptance throughout most regions of the world and that have sufficiently high enough frequency to build small antennas that fit within a hearing instrument. The present subject matter also provides ear-to-ear links using conductive transmission techniques that will work reliably without body shadow effects and have world-wide acceptance from a regulatory point of view, Various embodiments use the conductive link to enhance off the body communication by providing a relay from one aid to another from an off the body worn device or accessory. In various embodiments, near field communication links are used in place of a conductive link.

In various embodiments, a means of communication is provided using two radios or parts of the same radio such as the IF or baseband portion of the radio connected to a conductor made up of a conductive coating or conductive material in conjunction with the plastic resin forming the outer shell of a hearing instrument. The present subject matter combines two types of communication systems which differ substantially from one another in their method of communication. In various embodiments, each system of communication would have its own antenna, one that is isolated from the human tissue and one that is in contact with the human tissue. The two systems may or may not use the same carrier frequency or the same modulation techniques. Likewise the radio may or may not share circuitry such as IF filtering, baseband processing and the like. Ear-to-ear communication would use the method and antenna best suited for conduction on the wearer's skin in order to facilitate communication between the two ears with little or no body shadowing, interference, and multipath effects from off the body systems and objects. This conductive communication could be used to enhance the off the body communication by relaying data from an off the body device communicating with one aid to the other aid which may be shadowed by the body preventing line of sight communication with an off body accessory.

In various embodiments, an antenna is constructed using conductive plastic. This plastic resin is embedded with conductive material for the purpose of making the housing for a hearing instrument conductive or portions of the housing conductive and using that conductive property to build an antenna as part of the housing. This conductive material is used to contact the skin via the sweat layer on human skin to act as a connection for a time varying signal to be transmitted and received from one aid to another, in various embodiments. In addition, the short range communication system can be combined with a long range communication system for communicating off the body to and from accessories such as a remote control, audio streaming device, media player, cell phone entertainment device and the like. Higher frequencies above 1 GHz do not propagate well through the body with normal EM type antennas that are not in contact with the body. For this reason on the body propagation through conductive means or though magnetic induction (NFMI) or (NFC) can be used, in various embodiments.

In various embodiments, two antenna types are available one for off body communication using a dipole, monopole, loop, or other electrically small antenna for communication using 2.4 GHz or other available UHF frequency and another antenna for NFC (near field communication) or a conductive contact type of electrode for conduction on the skin. This second method (NFC or conduction) would be used for ear to ear communication from one hearing aid to another or to some other body worn device that is in contact with the wearer's skin or near the wearer's body.

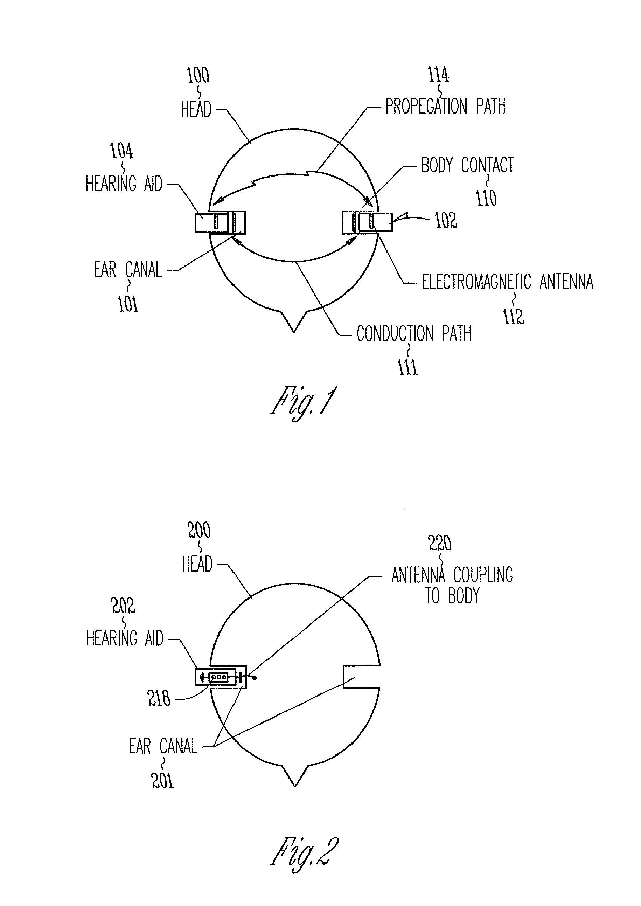

FIG. 1 illustrates a system including wireless ear-to-ear hearing assistance device communication, according to one embodiment of the present subject matter. A hearing aid 102 is shown in an ear canal 101 in a head 100 of a wearer having a hearing impairment. The hearing aid 102 is adapted to perform wireless communications, and includes a housing, hearing assistance electronics within the housing, a first antenna (body contact 110) incorporated into a portion of the housing, the antenna including a portion making contact with the wearer's skin and configured for short range communication with other body worn devices (in this case a second hearing aid 104 for ear-to-ear communication via skin conduction path 111) or accessories, and a second antenna (electromagnetic (EM) antenna 112) within the housing, the second antenna configured for conducting RF radiation for long range communication via propagation path 114.

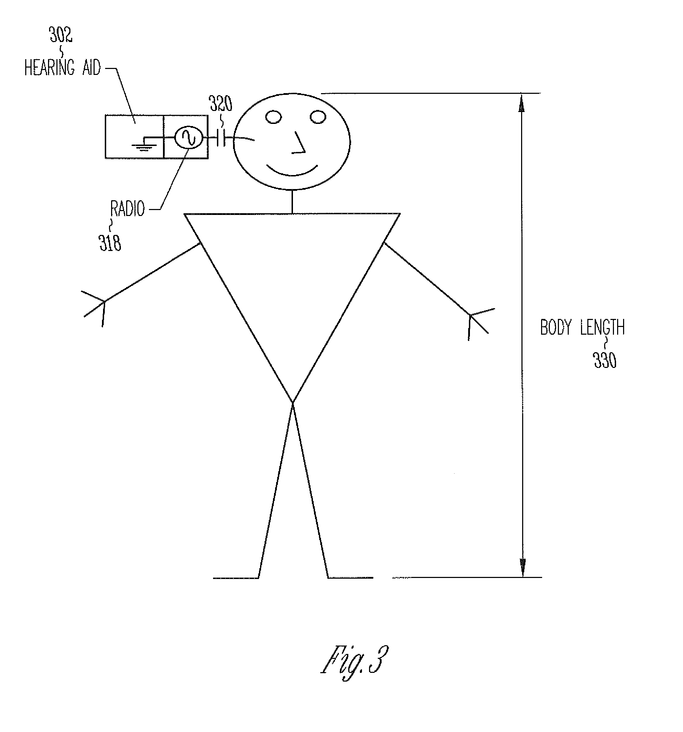

FIG. 2 illustrates a system for wireless hearing assistance device communication, according to one embodiment of the present subject matter. The depicted embodiment shows a hearing aid 202 in an ear canal 201 in a head 200 of a wearer having a hearing impairment. The hearing aid 202 includes a radio 218 with an antenna coupling 220 to the tissue of the wearer. The antenna coupling 220 uses body resonance to enhance either ear-to-ear communications or off body communications, in various embodiments. FIG. 3 illustrates a system for wireless hearing assistance device communication including antenna coupling, according to one embodiment of the present subject matter. A hearing aid 302 includes a radio 318 with an antenna coupling 320 to the tissue of the wearer. According to various embodiments, the body's length 330 is used as a resonant antenna element.

An antenna is used for reception and/or transmission depending on the embodiment of the present subject matter. It is understood that the antenna can be any of a variety of antenna types, including a tuned antenna, a multiband antenna, and a broadband antenna. It is understood that the antenna can be a variety of structures, including, but not limited to a single element or an antenna array.

It is understood that various tuning approaches can be used including, but not limited to, selection of a tuned antenna appropriate for the frequency of operation from a plurality of tuned antennas, automatic matching of an antenna for a selected frequency of operation, a broadband antenna approach and combinations of the foregoing.

In various applications hearing assistance device (100) is a hearing aid. In various applications the wireless communications are between two hearing assistance devices. In various applications the wireless communications are between a first hearing aid and a second hearing aid. In various applications the wireless communications are between a hearing assistance device and any other wireless device. In various applications, the hearing assistance device communicates with a second device that is a wireless audio controller. Some examples of wireless audio controllers are found in U.S. Patent Application Publication 2006/0274747, titled: COMMUNICATION SYSTEM FOR WIRELESS AUDIO DEVICES, and PCT Application Publication WO 2006/133158, titled: COMMUNICATION SYSTEM FOR WIRELESS AUDIO DEVICES, which are both hereby incorporated by reference in their entirety. In various applications, the second wireless device can be any wireless device, and the examples provided herein are intended to demonstrate the present subject matter, but not to limit it to the examples provided herein.

The present subject matter provides various communications, including, but not limited to, one or more of: ear-to-ear communications; ear-to-remote device communications; wireless programming, configuration and data logging; streaming audio; bi-directional audio; and/or remote control. It is understood that these communications can be unidirectional, bidirectional, or combinations of both. Such communications can also include far field communications (e.g., radio frequency communications), or combinations of near field (e.g., inductive link using substantially the magnetic field) and far field communications. Several modes of modulation and demodulation are possible and the examples given herein are demonstrative and not intended to be exclusive or limiting.

In various embodiments the wireless communications can include standard or nonstandard communications. Some examples of standard wireless communications include link protocols including, but not limited to, Bluetooth™, IEEE 802.11(wireless LANs), 802.15 (WPANs), 802.16 (WiMAX), cellular protocols including, but not limited to CDMA and GSM, ZigBee, and ultra-wideband (UWB) technologies. Such protocols support radio frequency communications and some support infrared communications. Although the present system is demonstrated as a radio system, it is possible that other forms of wireless communications can be used such as ultrasonic, optical, and others. It is understood that the standards which can be used include past and present standards. It is also contemplated that future versions of these standards and new future standards may be employed without departing from the scope of the present subject matter.

The wireless communications support a connection from other devices. Such connections include, but are not limited to, one or more mono or stereo connections or digital connections having link protocols including, but not limited to 802.3 (Ethernet), 802.4, 802.5, USB, ATM, Fibre-channel, Firewire or 1394, InfiniBand, or a native streaming interface. In various embodiments, such connections include all past and present link protocols. It is also contemplated that future versions of these protocols and new future standards may be employed without departing from the scope of the present subject matter.

In various embodiments a protocol is used, such as the protocol described in U.S. Patent Application Publication 2006/0274747, entitled; COMMUNICATION SYSTEM FOR WIRELESS DEVICES, and PCT Application Publication WO 2006/133158, titled: COMMUNICATION SYSTEM FOR WIRELESS AUDIO DEVICES, which are both hereby incorporated by reference in their entirety. In various embodiments, a protocol is used such as the protocol in U.S. Patent No. 7,529,565, which is hereby incorporated by reference in its entirety. Other protocols may be used without departing from the scope of the present subject matter.

It is understood that variations in communications protocols, antenna configurations, and combinations of components may be employed without departing from the scope of the present subject matter. It is understood that in various embodiments the microphone is optional. It is understood that in various embodiments the receiver is optional. Antenna configurations may vary and may be included within an enclosure for the electronics or be external to an enclosure for the electronics. Thus, the examples set forth herein are intended to be demonstrative and not a limiting or exhaustive depiction of variations,

The present subject matter can be used for a variety of hearing assistance devices, including but not limited to, cochlear implant type hearing devices, hearing aids, such as behind-the-ear (BTE), in-the-ear (ITE), in-the-canal (ITC), or completely-in-the-canal (CIC) type hearing aids. It is understood that belund-the-ear type hearing aids may include devices that reside substantially behind the ear or over the ear. Such devices may include hearing aids with receivers associated with the electronics portion of the behind-the-ear device, or hearing aids of the type having receivers in the ear canal of the user. Such devices are also known as receiver-in-the-canal (RIC) or receiver-in-the-ear (RITE) hearing instruments. It is understood that other hearing assistance devices not expressly stated herein may fall within the scope of the present subject matter.

This application is intended to cover adaptations or variations of the present subject matter. It is to be understood that the above description is intended to be illustrative, and not restrictive. The scope of the present subject matter should be determined with reference to the appended claims, along with the full scope of legal equivalents to which such claims are entitled.

## Claims

1. A hearing aid for a wearer having a hearing impairment, the hearing aid adapted to perform wireless communications, comprising:
a housing;
hearing assistance electronics within the housing; and
conductive liquid material incorporated into a portion of the housing, the conductive liquid material including a transmission line portion configured to conduct a signal from the hearing assistance electronics to an antenna portion of the conductive liquid material on an exterior surface of the housing.

2. The hearing aid of claim 1, wherein the conductive liquid material is formed by a stereolithographic process.

3. The hearing aid of claim 1 or claim 2, wherein the conductive liquid material includes a conductive elastomer.

4. The hearing aid of claim 1 or claim 2, wherein the conductive liquid material includes a liquid metal.

5. The hearing aid of claim 1, claim 3 or claim 4, wherein the conductive liquid material is deposited on a surface of the housing using a spray nozzle.

6. The hearing aid of claim 5, wherein the spray nozzle is configured to be computer controlled to adjust impedance, conductive properties, and aperture of the antenna portion.

7. The hearing aid of claim 1, claim 3 or claim 4, wherein the conductive liquid material is deposited on a surface of the housing by dipping the housing in a bath of conductive liquid material and selectively removing portions of the conductive liquid material to obtain desired antenna characteristics.

8. The hearing aid of claim 1, claim 3 or claim 4, wherein the conductive liquid material is deposited on a surface of the housing using an electroplating process.

9. The hearing aid of any of the preceding claims, wherein the antenna portion is formed by injecting conductive liquid material into a channel, cavity or void in the housing.

10. The hearing aid of claim 9, wherein the conductive liquid material includes an amalgam of metal that is liquid at or near room temperature.

11. The hearing aid of claim 9, wherein the conductive liquid material includes a conductive epoxy.

12. The hearing aid of claim 11, wherein the conductive epoxy includes metal filings to facilitate an increase in conductivity.

13. A method of wireless communication using a hearing aid for a wearer, the method comprising:
using a first antenna for short range communication with other body worn devices or accessories, the first antenna incorporated into a portion of a housing of the hearing aid and including a portion making contact with the wearer's skin; and
using a second antenna for conducting RF radiation for long range communication, the second antenna within the housing.

14. The method of claim 13, wherein the second antenna is insulated from the wearer's skin to increase off body radiation of RF signals.

15. The method of claim 13 or claim 14, wherein the hearing aid includes a multi-mode radio circuit configured to operate in a conduction mode and a radiation mode.
